# EUROPÄISCHE PATENTSCHRIFT

(11) **EP 1 925 488 B1**
(45) Veröffentlichungstag und Bekanntmachung des Hinweises auf die Patenterteilung: **16.02.2011**
(21) Anmeldenummer: 07076096.2
(22) Anmeldetag: 01.12.2003
(51) Int. Cl.: B60K 37/00, B62D 25/14, B29C 70/48

(54) **Instrumententafel sowie Verfahren zu deren Herstellung**
Instrument panel and method for its manufacture
Tableau de bord et son procédé de fabrication

(30) Priorität: 02.12.2002 DE 10257161
(43) Veröffentlichungstag der Anmeldung: 28.05.2008
(62) Teilanmeldung aus: 03780094.3
(73) Patentinhaber: Faurecia Innenraumsysteme GmbH, 76767 Hagenbach (DE)
(72) Erfinder: Braun, Marco, 76848 Lug (DE); Doll, Volker, 76829 Ranschbach (DE); Kober, Steve, 08233 Treuen (DE); Thöres, Dieter, 76149 Karlsruhe (DE); Maier, Thomas, 76131 Karlsruhe (DE)
(74) Vertreter: Pfenning, Meinig & Partner GbR

(56) Entgegenhaltungen:
- WO-A-97/49599
- US-A- 4 455 338
- US-A- 5 273 597
- US-A- 5 564 515

## Beschreibung

Die vorliegende Erfindung betrifft ein Verfahren zu Herstellung einer Instrumententafel, sowie ein Kraftfahrzeug enthaltend eine Instrumententafel nach diesem Verfahren hergestellt.

Es sind verschiedene Ausführungsformen von Instrumententafeln für Kraftfahrzeuge bekannt.

Üblicherweise sind Instrumententafeln z.B. auf einem zwischen den A-Säulen eines Kraftfahrzeuges angeordneten Querträger befestigt. Hierzu weisen die Instrumententafeln selbst meist noch eine zusätzliche Trägerstruktur auf, auf welchem sich eine Hülle aus meist spritzgegossenem Kunststoff abstützt, welche fahrzeuginnenraumseitig mit einer Dekorschicht belegt sein kann.

Der Nachteil von diesen bekannten Instrumententafeln liegt darin, dass diese aufgrund ihres oben geschilderten Aufbaus recht gewichtsintensiv sind und trotzdem angesichts der sie angreifenden Lasten stellenweise trotzdem unterdimensioniert oder überdimensioniert sind, so dass es z.B. zu ungewünschten Brüchen der Instrumententafel bei einer Kollision kommen kann. Besonders wesentlich ist allerdings der Gewichtsaspekt, wobei der übliche Querträger außerdem für ein hohes Fahrzeuggewicht sorgt, da er allein z.B. 6 - 8 kg schwer sein kann.

Zur Versteifung der Instrumententafel ist es bisher üblich gewesen, stellenweise flächige Verstärkungen anzubringen, etwa an besonders belasteten Stellen wie Airbagdurchgangsöffnungen etc. Hierdurch ergibt sich allerdings das Problem, dass die Anbindung von z.B. Metallverstärkungsblechen an ein Kunststoffteil relativ aufwendig sein kann. So kann außerdem z.B. durch den unterschiedlichen Wärmeausdehnungskoeffizienten des Metallbleches sowie des daran anliegenden Kunststoffes es zu Verwölbungen in der Instrumententafel kommen, welche fahrerraumseitig sichtbar sind und somit eine Qualitätseinbuße darstellen.

Der vorliegenden Erfindung liegt daher die Aufgabe zugrunde, ein Verfahren zur Herstellung einer Instrumententafel zu schaffen, welches garantiert, dass einerseits hoch belastbare Instrumententafel gegeben ist und diese außerdem leichtgewichtig, kostengünstig und sicher ist.

Diese Aufgabe wird durch ein Herstellungsverfahren nach Anspruch 1 gelöst. Das Dokument WO-A-97/49599 offenbart ein Herstellungsverfahren nach dem Oberbegriff von Anspruch 1.

Hierbei sind die Rahmenstruktur bzw. die damit stoffschlüssig verbundenen Kunststoffelemente direkt mit einer Dekorschicht belegt, und andererseits ist die kraftaufnehmende Rahmenstruktur der Instrumententafel direkt mit einer Stirnwand und/oder einer Kraftfahrzeugkarosserie verbunden. Die Rahmenstruktur ist hierbei derart ausgelegt, dass ein zwischen den A-Säulen des Kraftfahrzeugs verlaufender Querträger verzichtbar ist.

Hierdurch wird ein leicht zu bauender und außerdem kostengünstig herzustellender Träger, der gleichzeitig eine Instrumententafel darstellt, erstmals bereitgestellt.

Die Rahmenstruktur wird hierbei so berechnet, dass die auf die Instrumententafel einwirkenden Kräfte hauptsächlich durch deren geeignete Struktur aufgefangen werden. Hierzu tragen selbstverständlich auch die Kunststoffplattenelemente bei, welche auch zu einer Versteifung der Instrumententafel beitragen, da sie in ihren Randbereichen mit den linienförmigen Elementen stoffschlüssig verbunden sind. Unter stoffschlüssiger Verbindung ist hierbei primär ein Umschmelzen bzw. Anschmelzen von flüssigem Kunststoff an die linienförmigen Elemente gemeint. Alternativ sind unter der stoffschlüssigen Verbindung allerdings auch z.B. Schweißverfahren bzw. weitere Verfahren der "chemischen Verschmelzung", etwa mit Kunststoffharzen gemeint. Die Kunststoffplattenelemente werden hierbei in einem Spritzgussverfahren als flüssiger Kunststoff in ein entsprechendes Formwerkzeug eingebracht, in welchem die linienförmigen Elemente bereitgestellt sind.

Mit der erfindungsgemäßen Instrumententafel wird somit erstmals eine "ganzheitliche" Verstärkung der gesamten Instrumententafel erreicht, im Gegensatz zu bisher üblichen lediglich lokalen Verstärkungen. Hierbei bietet sich bei der Auslegung der erfindungsgemäßen Rahmenstruktur auch ein besonderes Verfahren an, welches eine auf die Belastung abgestimmte Konstruktion der Instrumententafel ermöglicht.

Zunächst wird hierbei der ganze Cockpitbereich als ein "großer Quader" gesehen. Auf diesen Quader werden die Lasten definiert (z.B. "Missbrauchskräfte", wie sie bei der Airbagauslösung bzw. ein "Mantelrichttest" an dem Lenkrad entstehen können). Dann werden außerdem Bereiche definiert, in denen ein Freiraum liegen sollte, also Bereiche, in denen der Quader "ausgeschnitten" sein muss, um z.B. Fußraum für Fahrzeuginsassen zu schaffen. Dort kann sich dann keine Struktur befinden. Bei der dann stattfindenden Auslegung der Profile wird der Hauptkraftfluss im verbleibenden Quader bestimmt. Hieran wird ein angepasstes "Gitterprofil" modelliert. Entlang dieser Gitterlinien werden dann linienförmige Elemente einer Rahmenstruktur angeordnet. Zusätzlich wird in den Bereichen zwischen den linienförmigen Elementen bzw. "Kraftflusslinien" überspannende Bereiche vorgesehen, hier die erfindungsgemäßen Kunststoffplattenelemente. Auf diese Art wird eine optimierte Trägerstruktur erhalten, welche lediglich dort existiert, wo sie aus Kräftegründen wirklich nötig ist. Vorteilhaft hieran ist, dass Verstärkungen sich dann nur dort befinden, wo sie tatsächlich gebraucht werden, durch die optimierte Auslegung Gesamtgewicht des Kraftfahrzeuges eingespart wird, unter Umständen sogar ein Querträger sich einsparen lässt, sich Kosten einsparen lassen und mehr Bauraum zur Verfügung steht. Hierdurch wird mehr nutzbarer Raum im Cockpitbereich erzeugt, z.B. für Klimagerät, Elektronikkomponenten, Ablageboxen; dadurch entsteht ein höherer Gestaltungsspielraum beim Entwurf der Instrumententafel.

Das erfindungsgemäße Verfahren ist ein Verfahren zum Herstellen einer Instrumententafel und Anbringen derselben in einem Kraftfahrzeug, wobei eine aus linienförmigen Elementen aufgebaute Rahmenstruktur, welche bereichsweise mit Kunststoffplattenelementen verschlossen ist, mit einer Dekorschicht belegt wird, wobei die Rahmenstruktur derart ausgelegt ist, dass ein zwischen den A-Säulen des Kraftfahrzeugs verlaufender Querträger verzichtbar ist und die Rahmenstruktur direkt mit einer Stirnwand und/oder der Kraftfahrzeugkarosserie verbunden wird.

Eine vorteilhafte Weiterbildung der Instrumententafel sieht vor, dass der Querschnitt der linienförmigen Elemente im in der Instrumententafel verbauten Zustand U-förmig, rund, oval oder mehreckig ist. Es können hier prinzipielle geschlossene oder offene Querschnitte zur Anwendung kommen. Es ist hierbei zu beachten, dass die linienförmigen Elemente im verbauten Zustand auch zur Führung von Kabeln bzw. zur Luftführung dienen können. Insbesondere vorteilhaft ist z.B. ein U-Profil, welches zur Außenseite der Instrumententafel hin offen ist, so dass z.B. Kabelstränge von außen leicht zugänglich in dieses U-Profil eingelegt werden können.

Neben Profilen mit einfachen (Endlos-)Querschnittsformen sind auch kompliziertere Strukturen verwendbar, wenn spezielle Aufgabenbereiche erfüllt werden sollen. So ist es z.B. möglich, dass das linienförmige Element ein Streifen einer Bienenwabensandwichstruktur ist. Hierbei werden z.B. mehrere nebeneinander liegende Bienenwaben-Achtecken vorgesehen, welche zwischen zwei Deckplatten eingeschlossen sind. Somit ergibt sich eine sehr leicht bauende Struktur mit sehr guten Festigkeitswerten.

Eine besondere Art, die Anbindung des angespritzten, angeschmolzenen oder umspritzten Kunststoffes an die linienförmigen Elemente zu erreichen, ist z.B., dass die linienförmigen Elemente an ihrer Außenseite spezielle Stege aufweisen. Diese dienen zunächst einmal der Versteifung des linienförmigen Elementes selbst, es ist aber hierdurch auch eine Vergrößerung der Ankoppelfläche an den zu umspritzenden Kunststoff gegeben. Es hat sich gezeigt, dass aus Stabilitätsgründen es besonders günstig ist, die Stege jeweils geneigt (z.B. 45°) zur Hauptverlaufsrichtung des linienförmigen Elementes selbst anzuordnen, um so eine höchstmögliche Stabilität und Einbindung des linienförmigen Elementes in die Instrumententafel zu erreichen.

Als Materialien für die linienförmigen Elemente kommen vielfältige Materialien in Betracht. Zunächst können die linienförmigen Elemente aus Metallblech, etwa Stahlblech, gelochtem Metallblech oder z.B. aus Aluminium oder Magnesium bestehen. Selbstverständlich ist es aber auch möglich, Fasermaterialien vorzusehen. Es können hierbei prinzipiell streifenförmige Gewebe bzw. Gewirke eingesetzt werden, welche erst im Umspritzungsvorgang ihre volle Festigkeit entfalten. Es ist auch möglich, dass die linienförmigen Elemente aus Endlosfasern verbaut werden. Dies sind z.B. Rohre aus Endlosfasern, als Grundfasern kommen hier Glasfasern oder auch Kohlefasern zur Anwendung, welche z.B. bereits vor dem Verspritzen mit einem thermoplastischen Kunststoff gebunden sind. Durch das anschließende Umspritzen mit dem Kunststoff, welche die späteren Kunststoffplattenelemente bildet, ergibt sich eine besonders gute Verschmelzung dieser linienförmigen Elemente in der Gesamtstruktur.

Die Kunststoffplattenelemente können aus verschiedenen Kunststoffen gebildet sein. Z.B. ist es möglich, dass diese aus einem thermoplastischen Kunststoff gebildet sind, z.B. aus PP30LGF, einem Polypropylen-Werkstoff, welcher Langfaseranteile besitzt. Diese Langfaserteile sind Glasfasern, beim erfindungsgemäßen Spritzgussverfahren haben diese Glasfasern vorzugsweise eine Länge von 10 mm. Alternative Kunststoffe hierzu sind z.B. Polyamide PA, ABS, PC, ABS/PC, Polyinide, PEEK, PEU, PPS, PEI, PSU, PESU, PPSU und PTFE.

Die erfindungsgemäße Instrumententafel hat den Vorteil, dass sie einen "ganzheitlichen" Ansatz bei der Stabilität der Instrumententafel verfolgt. Es werden keine lediglich lokalen Verstärkungen eingebracht, sondern die Gesamtstruktur hat die angestrebte Steifigkeit. Der erfindungsgemäß gebildete Träger kann zusätzlich, wenn dies aus ästhetischen Gründen gewünscht wird, mit einer zu dem Kraftfahrzeuginnenraum hin angeordneten Dekorschicht belegt sein. Dies kann z.B. eine Slush-Haut, Leder oder auch ein Kunststoffgewebe, Textil, Gießhaut, Sprühhaut sein. Vorteilhaft hierbei ist auf jeden Fall, im Gegensatz zu bekannten Konzepten, dass die Dekorschicht direkt auf eine tragende Struktur geklebt werden kann, es sind keine zusätzlichen Bauelemente, wie etwa Querverstrebungen zwischen einem Querträger eines Kraftfahrzeuges und einer tragenden Kunststoffhaut für die Dekorschicht nötig.

Das erfindungsgemäße Verfahren zur Herstellung einer Instrumententafel hat verschiedene vorteilhafte Ausgestaltungen.

So ist es z.B. möglich, dass die linienförmigen Elemente als vorher praktisch vollständiger Rahmen in das Formwerkzeug eingelegt werden. Dies ist z.B. möglich, wenn ein vorgefertigter Metallrahmen in ein Formwerkzeug eingelegt wird.

In Bezug auf die Herstellungskosten ist es vorteilhaft, dass die linienförmigen Elemente jedoch als Einzelstücke in das Formwerkzeug eingelegt werden. Hierzu können z.B. von einem Endlosmaterial (z.B. einem Rohr aus Fasermaterialien) Stücke abgetrennt werden, welche dann einzeln in das Formwerkzeug eingelegt werden und erst beim Umspritzen mit dem in das Formwerkzeug eingespritzten Kunststoff einen fertigen Rahmen bilden.

Eine besonders vorteilhafte Weiterbildung sieht vor, dass Streifen aus einem Fasermaterial, etwa einem Gewebe, einem Vlies oder dergleichen, in eine Vertiefung einer ersten Formhälfte eines Spritzgusswerkzeuges eingelegt werden und anschließend eine zweiten Formhälfte, welche eine zur Vertiefung korrespondierende Auswölbung aufweist, mit der ersten Formhälfte so in Deckung gebracht wird, dass zwischen beiden zumindest bereichsweise ein Spalt verbleibt und anschließend ein Kunststoff in den Formraum eingespritzt wird. Hierbei wird der Streifen aus Fasermaterial durch das Formwerkzeug selbst (also durch die Vertiefung bzw. die Auswölbung der Formhälften) in die richtige Form gebracht und danach umspritzt. Es ergibt sich hierdurch eine sehr kostengünstige Anordnung, welche stabile Querschnitte der linienförmigen Elemente ermöglicht. Zum besseren Fließen des Kunststoffes im Bereich des eingelegten Streifens ist es vorteilhaft, dass zwischen den korrespondierenden Vertiefungen bzw. Auswölbungen zusätzlich zur Dicke des Streifens nochmals z.B. 2 - 4 mm große Spalträume vorgesehen werden. Die Temperatur des Werkzeuges (also der Formhälften) liegt hierbei etwa auf Höhe der Erweichungstemperatur des zu verspritzenden Kunststoffes, also z.B. ca. 160°C bei Polypropylen.

Die hier gezeigte Erfindung ist insbesondere für Kraftfahrzeuge anwendbar. Es bietet sich hierbei an, dass die kraftaufnehmende Rahmenstruktur der Instrumententafel direkt mit einer Stirnwand und/oder der Kraftfahrzeugkarosserie verbunden ist. Es muss keine Verbindung zu einem Querträger hergestellt werden, um die Instrumententafel abzustützen. Es kann sogar durch entsprechend starke Auslegung der Rahmenstruktur erreicht werden, dass auf den Querträger verzichtet werden kann und somit weiteres Gewicht gespart wird.

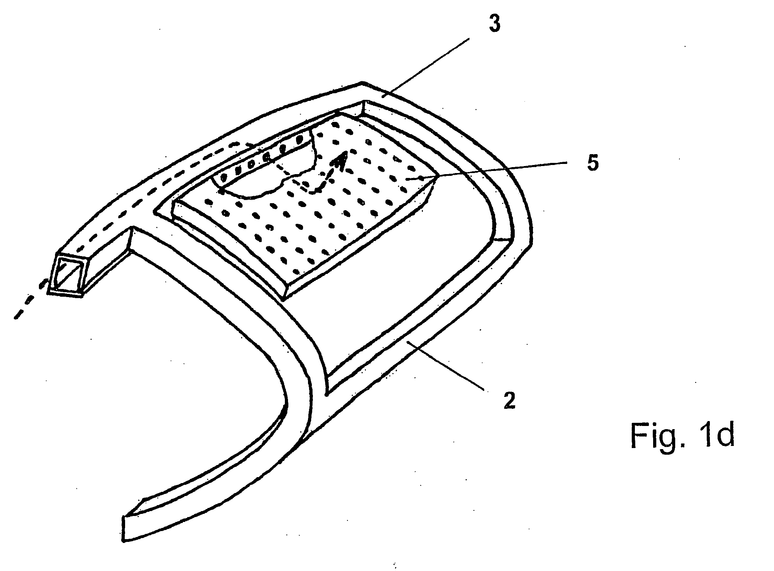

Die Rahmenstruktur könnte zur Luftführung oder Kabelführung dienen. Ebenfalls wäre es denkbar, die Rahmenstruktur als Verteiler der Luft in großflächiger Ausströmfelder zu nutzen (s. Fig. 1d).

Weitere vorteilhafte Weiterbildungen werden in den übrigen abhängigen Ansprüchen angegeben.

Die Erfindung wird nun anhand mehrerer Figuren erläutert. Es zeigen:
- Fig. 1a: eine erfindungsgemäße Rahmenstruktur,
- Fig. 1b: eine erfindungsgemäße Instrumententafel,
- Fig. 1c: einen Schnitt gem. Schnittebene A aus Fig. 1b,
- Fig. 1d: eine zur Luftführung dienende Rahmenstruktur mit flächigen Ausströmfeldern im Bereich der Kunststoffplattenelemente,
- Fign. 2a - 2d: verschiedene Ausführungsbeispiele von linienförmigen Elementen im Querschnitt und in der Seitenansicht sowie
- Fig. 3: einen Querschnitt durch ein erfindungsgemäßes Spritzgusswerkzeug zur Herstellung einer erfindungsgemäßen Instrumententafel.

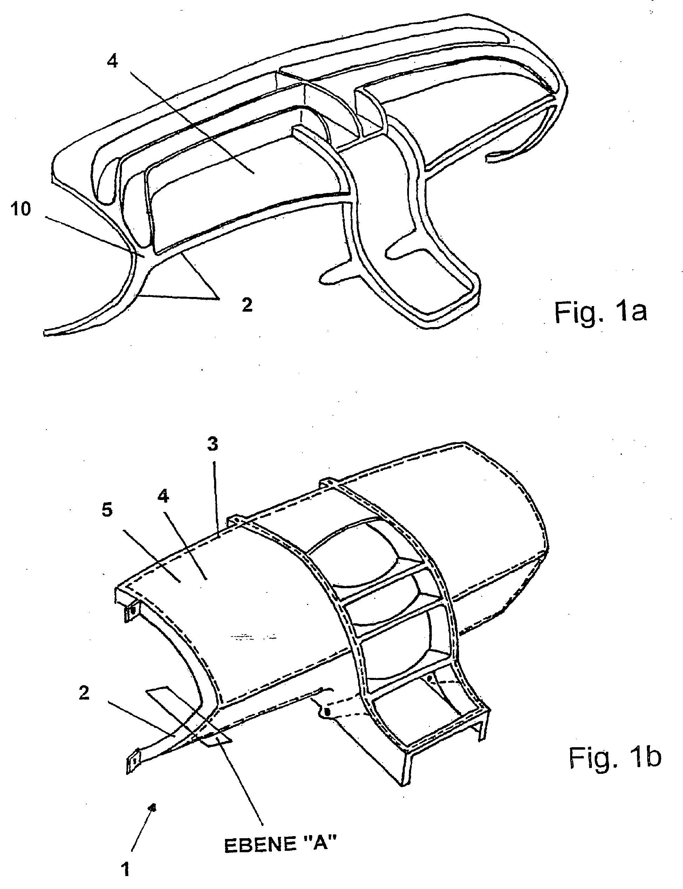

Fig. 1a zeigt eine erfindungsgemäße Rahmenstruktur 3. Diese besteht aus linienförmigen Elementen 2, welche in Eckpunkten 10 zusammengeführt sind. Es sind Bereiche 4 zu sehen, welche von linienförmigen Elementen 2 umgrenzt bzw. eingeschlossen sind. Die in Fig. 1a gezeigte Rahmenstruktur ist die Rahmenstruktur einer Instrumententafel für ein Kraftfahrzeug.

In Fig. 1b ist eine komplette erfindungsgemäße Instrumententafel 1 gezeigt. Diese weist die (in Fig. 1a aus Verständlichkeitsgründen einzeln gezeigte) Rahmenstruktur 3 auf mit linienförmigen Elementen 2. Die von den linienförmigen Elementen 2 begrenzten Bereiche 4 der Rahmenstruktur sind zumindest bereichsweise mit Kunststoffplattenelementen 5 verschlossen. Die Kunststoffplattenelementen sind hierbei mit den linienförmigen Elementen 2 stoffschlüssig verbunden. Die stoffschlüssige Verbindung wurde hier durch das Einspritzen eines thermoplastischen Kunststoffes erreicht, welcher nach seiner Aushärtung die Kunststoffplattenelemente bildet, hierbei kommt es zu einem Anschmelzen bzw. Umschmelzen dieses Kunststoffes an die linienförmigen Elemente, so dass sich eine stoffschlüssige Verbindung ergibt.

Die in Fig. 1b gezeigte Instrumententafel kann zusätzlich mit einer Dekorschicht belegt sein, z.B. einer Schaumfolie, bzw. mit Leder oder einer textilen Dekorschicht.

Die linienförmigen Elemente 2 sind bei der Ausführungsform nach Fig. 1b als U-förmige Endlosteile aus Metallblech ausgeführt.

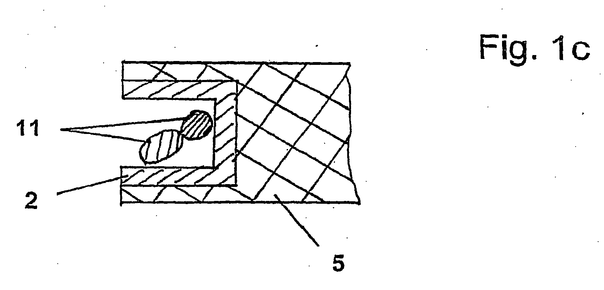

Dies wird durch den in Fig. 1c gezeigten Schnitt gemäß der Schnittebene A sichtbar. Hier ist zu sehen, wie die Kunststoffplattenelemente 5 um den U-förmigen Querschnitt herum gespritzt sind, so dass lediglich die offene Flanke des "U" nach außen hin offen ist. Hierdurch wird es möglich, z.B. Kabel etc. innerhalb des U zu verlegen. Selbstverständlich könne auch nicht dargestellte Verschlusselemente später an der Offenseite des U vorgesehen werden, um ein Herausrutschen der Kabel 11 zu verhindern. Das Kunststoffplattenelement besteht aus einem Polyolefin-Verbundmaterial, hier PP30LFG, also ein Polypropylen mit hierin eingelegten Fasern mit einer Länge von 10 mm.

Fig. 1d zeigt eine aus linienförmigen Elementen 2 aufgebaute Rahmenstruktur 3. Diese Rahmenstruktur hat zumindest bereichsweise innen hohle linienförmige Elemente 2, welche an ihrer seitlichen Anbindung zu den Kunststoffplattenelementen 5 Löcher zur Luftströmung aufweisen. Das Kunststoffplattenelement 5 weist eine Vielzahl von Ausströmöffnungen zum Kraftfahrzeuginnenraum hin auf, so dass die durch die hohlen linienförmigen Elemente 2 zugeführten Luftmassen diffus und flächig aus den Kunststoffplattenelement 5 ausströmen können.

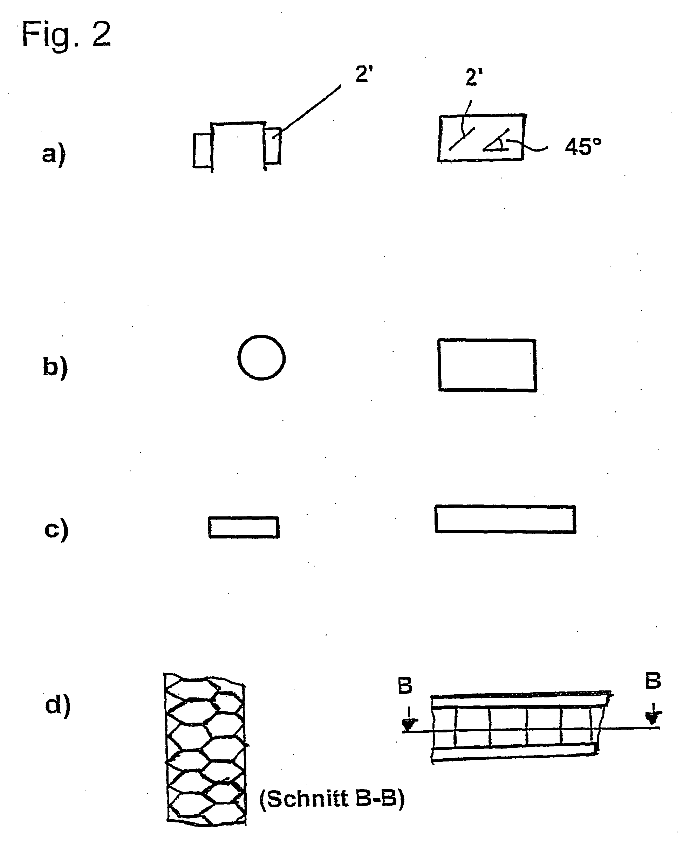

Fig. 2 zeigt verschiedene Möglichkeiten für die Geometrie von linienförmigen Elementen. Hierbei ist jeweils linksseitig der Querschnitt gezeigt und rechtsseitig eine Seitenansicht eines Stückes der jeweiligen Ausführungsform des linienförmigen Elementes.

In Fig. 2a links ist ein U-förmiger Querschnitt gezeigt (wie in Fig. 1c), allerdings mit dem Zusatz, dass beidseitig an den Schenkeln des U noch Stege 2' herausstehen. Aus der Seitenansicht rechts in Fig. 2a wird klar, dass diese Stege geneigt sind, und zwar um etwa 45° gegenüber der Horizontalen. Hierdurch ergibt sich beim Umspritzen mit einem Kunststoffplattenelement eine noch bessere Anbindung des linienförmigen Elementes an das Kunststoffplattenelement 5.

In Fig. 2b ist ein kreisförmiger Querschnitt eines linienförmigen Elementes gezeigt. Aus Fig. 2b rechts wird klar, dass es sich hierbei um ein "Rohrstück" handelt mit gleichbleibendem Außendurchmesser. Dieser Rohrquerschnitt kann z.B. aus Metallblech bzw. gelochtem Metallblech gefertigt sein, es ist selbstverständlich auch möglich, dass es sich hierbei um ein aus Fasern "gewickeltes" Rohr handelt.

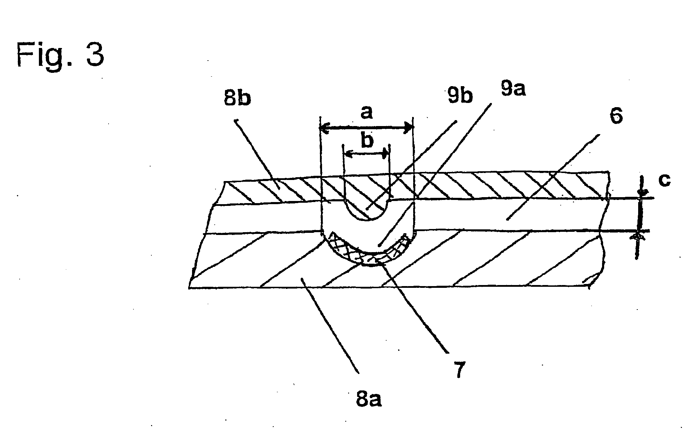

In Fig. 2c ist ein Flachquerschnitt gezeigt. Hierbei ist linksseitig der Rechteckquerschnitt des linienförmigen Elementes zu erkennen. Dieses kann entweder aus Kunststoff oder auch aus Metall oder einem Fasermaterial (gewebt oder als Vlies) bestehen. Diese Variante bietet sich insbesondere für die später in Fig. 3 gezeigte Herstellungsvariante an.

Schließlich zeigt Fig. 2d eine Bienenwabensandwichstruktur. Hierbei ist in Fig. 2d rechts eine seitliche Ansicht gezeigt. Hier ist zu sehen, dass senkrecht stehende Bienenwabenzellen (achteckig) zu sehen sind, welche mit einer oberen und einer unteren Deckplatte (diese Platte könnte auch ein in thermoplastischen Kunststoff getränktes Gewebe sein) versehen sind. Dies wird aus dem Schnitt B-B, welcher linksseitig zu sehen ist, nochmals deutlicher.

Die Herstellung der Instrumententafel nach er Erfindung ist auf verschiedene Weisen möglich. Besonders einfach ist es hierzu, dass linienförmige Elemente in einen Formraum eines Spritzgusswerkzeuges eingelegt werden und anschließend in dem Spritzgusswerkzeug, unter Bildung der Instrumententafel, mit Kunststoff zumindest bereichsweise umschmolzen werden. Hierbei sieht eine Variante vor, dass die linienförmigen Elemente als vorher fertiger selbsttragender Rahmen (welche etwa aussähen, wie der Rahmen in Fig. 1a) und z.B. aus Aluminiumdruckguss besteht, eingelegt werden.

Es kann jedoch sehr kostengünstig sein, dass die linienförmigen Elemente als Einzelstücke in den Formraum eingelegt werden. Hierzu ist eine besonders vorteilhafte Herstellvariante vorgesehen, welche in Fig. 3 nun näher erläutert wird.

In Fig. 3 ist schematisch der Querschnitt eines Spritzgussformwerkzeuges gezeigt. Dieses weist eine erste Formhälfte 8a und darüberliegend eine zweite Formhälfte 8b auf. Zwischen diesen Formhälften ist ein Formraum 6 gegeben, welcher eine Spalthöhe c von 1 - 6 mm hat.

Die erste Formhälfte 8a hat eine im Querschnitt etwa halbkreisförmige Vertiefung 9a. Die zweite Formhälfte 8b hat vertikal fluchtend eine Auswölbung 9b, welche eine komplementäre Form besitzt, allerdings deutlich kleiner ist. Die Vertiefung 9a hat eine Breite im Querschnitt von a, die Auswölbung 9b im Querschnitt eine Breite von b. b ist in Abhängigkeit von c kleiner als a.

Nun ist es möglich, einen aus einem Fasergeflecht (Fasergewebe/Faservlies) bestehenden Streifen 7 entlang der Vertiefung 9a zu legen, so dass dieser im wesentlichen den halbkreisförmigen Querschnitt der Vertiefung 9a annimmt. Daraufhin wird dann die zweite Formhälfte 8b bis auf den Mindestspalt c heruntergefahren. Hiernach kommt es zu einem Spritzguss eines thermoplastischen Kunststoffes in dem Formraum 6, wobei der Streifen 7 getränkt und außerdem in dem Formraum 6 Kunststoffplattenelemente 5 sich bilden. Hierdurch ist auf eine sehr kostengünstige Weise eine erfindungsgemäße Instrumententafel herstellbar.

Die erfindungsgemäße Instrumententafel hat den Vorteil, dass sie aufgrund ihrer Eigenstabilität (d.h. wegen der Rahmenstruktur) deutlich stabiler ist als bisherige Instrumententafeln. Sie kann direkt mit der Stirnwand und/oder der Kraftfahrzeugkarosserie eines Kraftfahrzeuges verbunden sein. Es ist nicht mehr nötig, die erfindungsgemäße Instrumententafel auf einem Querträger des Kraftfahrzeuges abzustützen.

Im Folgenden sollen nochmals besonders wichtige Punkte der Erfindung einzeln betont werden.

Es ist besonders vorteilhaft, dass mit der vorliegenden Konstruktion die Integrierung von linienförmigen Elementen in Form von Hohlprofilen möglich ist, so dass innen verlaufende Hohlräume der Profile auch zur Führung von z.B. Kabeln oder auch Luftströmen zur Innenraumbelüftung genutzt werden können. So wird nochmals insbesondere auf die Fig. 1d hingewiesen. Die dortige Anordnung zur Belüftung des Innenraums ist z.B. so herstellbar, dass die Lüftungskanäle, welche durch das Matrixmaterial laufen, durch ein "Durchblasen" dieses Materials vor der endgültigen Erstarrung geleistet wird, hierzu sind vorzugsweise in der Formgebung des Formwerkzeugs Erhebungen zur Gestaltung der Luftauslässe vorzusehen.

Ein besonders wichtiger Aspekt der Erfindung geht dahin, dass mit einem erfindungsgemäßen Träger insbesondere die Stabilität der Instrumententafel erhöht wird, durch den möglichen Verzicht auf einen Querträger werden Leichtbauanforderungen erfüllt.

Dies wird vorzugsweise dadurch erreicht, dass als linienförmige Elemente, z.B. Bündel von Endlosfasern oder Streifen von Mattenmaterial eingelegt werden, wobei das Mattenmaterial als ein- oder mehrschichtig aufgebautes Vlies oder Gewebe ausgestaltet ist. Dem liegt der erfindungsgemäße Gedanke zugrunde, dass es kostenaufwendig und auch gewichtsintensiv ist, eine stabile Instrumententafel überall gleich stark zu gestalten, um so auf jeden Fall auch an der am stärksten belasteten Stelle ausreichende Stabilität zu besitzen.

In diesem Zusammenhang wird rückblickend nochmals auf die Fig. 1a verwiesen, bei der die dort verlaufenden Linien den Kraftfluss in der Instrumententafel wiedergeben. Es ist nun möglich, in diese Kraftflusslinien hinein z.B. streifenförmiges Fasermaterial zu legen. An den Kraftflusslinien, wo besondere hohe Kräfte wirken, können dann (entweder durch mehr Material oder durch besondere Werkstoffe) besondere Anpassungen getroffen werden.

Als Fasermaterial haben sich mehrere Materialien als besonders vorzugsweise herausgestellt. So ist es z.B. möglich, Streifen aus gewebten Glasfasermatten einzulegen. Diese können z.B. mit einem Thermoplasten vorimprägniert sein oder sogar Thermoplast-Fäden, z.B. Polypropylen-Fäden enthalten, so dass die anschließende Einbindung in Matrixmaterial noch besser erfolgt (solche Produkte sind z.B. bei der Firma "Vetrotex" erhältlich). Das Einlegen solcher Streifen (bzw. "zugeschnittener Matten") mit Öffnungsbereichen, also quasi in "Maskenform" bietet sich insbesondere an, wenn der Träger auch stark auf Torsion belastet werden soll.

Insbesondere zur Aufnahme von Zugbelastung (z.B. bei der Ersetzung eines Querträgers) kann es auch möglich sein, Glas in Endlos-Glasfasern vorzusehen bzw. ganze Bündel von Endlos-Glasfasern. Hier ist das Fasermaterial kein Gewebe bzw. Vlies sondern ein Strang einzelner Fasern, welche eventuell auch karosserieseitig angebunden werden können und somit die Querträgerfunktion übernehmen.

Insbesondere ist also vorteilhaft, dass hier (je nach Belastung) die Wahl des Materials bzw. wie viel von diesem Material verbaut wird, getroffen werden kann.

Hierzu sollen noch einige Beispiele genannt werden. Bei dem Matrixmaterial, welches die erfindungsgemäßen Kunststoffplattenelemente bildet, welche die linienförmigen Elemente zumindest teilweise umschließen, handelt es sich vorzugsweise um ein relativ "stabiles" Material, welches das Fasermaterial zumindest bereichsweise durchdringt und durch diese Verbindung eine extrem stabile aber trotzdem leichtgewichtige Struktur entstehen lässt. Es ist hier im Allgemeinen nicht ausreichend, das Material einfach nur "einzuschäumen", am ehesten ist eine Verbindung mit stabilen Kunststoffen wie Polypropylen (z.B. PP30 mit 30 mm langen Glasfasern verstärktes Propylen (Polypropylen 30 LGF)) möglich, alternativ sind z.B. auch verstärkte oder unverstärkte Polyamide möglich. Hierbei sollte der Zug-E-Modul des Matrixmaterials vorzugsweise mehr als 2000 N/m², besonders vorzugsweise über 3500 N/m² betragen. Für besonders extreme Anwendungen ist allerdings auch möglich, Material mit E-Modulen von 22000 N/m² und größer zu erreichen, hier kommen z.B. Sandwich-Aufbauten aus mehreren Schichten Glasfasermatten mit unterschiedlichen Trennschichten zum Einsatz.

Bei der Verbindung des Fasermaterials mit dem Matrixmaterial sind auch unterschiedliche Verbindungsmöglichkeiten gegeben.

Bei nicht so hoch belasteten Teilen kann es z.B. ausreichend sein, in eine Form (wie sie z.B. in Fig. 3 gezeigt ist) durch Spritzgießen Schmelze von PP30 LGF einzubringen, allerdings wird durch den Spritzgussprozess hierbei eine Faserverkürzung stattfinden, welche die Stabilität eher negativ beeinflusst.

## Patentansprüche

1. Verfahren zum Herstellen einer Instrumententafel(1) und Anbringen derselben in einem Kraftfahrzeug, wobei eine aus linienförmigen Elementen (2) aufgebaute Rahmenstruktur (3), welche bereichsweise mit Kunststoff plattenelementen (5) verschlossen ist, mit einer Dekorschicht belegt wird, wobei die Rahmenstruktur derart ausgelegt ist, dass auf einen zwischen den A-Säulen des Kraftfahrzeugs verlaufenden Querträger verzichtet wird und die Rahmenstruktur direkt mit einer Stirnwand und/oder der Kraftfahrzeugkarosserie verbunden wird, **dadurch gekennzeichnet, dass** eine stoffschlüssige Verbindung zwischen den Kunststoffplattenelementen (5) und den linienförmigen Elementen (2) durch das Einspritzen eines thermoplastischen Kunststoffs, welcher nach seiner Aushärtung die Kunststoffplattenelemente bildet, erreicht wird und es zu einem Umschmelzen des thermoplastischen Kunststoffs an die linienförmigen Elemente kommt.

2. Kraftfahrzeug, enthaltend eine Instrumententafel (1) hergestellt nach Anspruch 1, wobei die kraftaufnehmende Rahmenstruktur der Instrumententafel direkt mit einer Stirnwand und/oder einer Kfz-Karosserie verbunden ist.

3. Kraftfahrzeug, enthaltend eine Instrumententafel nach Anspruch 2, **dadurch gekennzeichnet, dass** der Querschnitt der linien-förmigen Elemente im in der Instrumententafel verbauten Zustand U-förmig, rund, oval oder mehreckig ist.

4. Kraftfahrzeug, enthaltend eine Instrumententafel nach Anspruch 2, **dadurch gekennzeichnet, dass** das linienförmige Element ein Streifen einer Bienenwabensandwichstruktur ist.

5. Kraftfahrzeug, enthaltend eine Instrumententafel nach einem der Ansprüche 2 bis 4. **dadurch gekennzeichnet, dass** das linienförmige Element (2) aus Metallblech, gelochtem Metallblech, Kunststoff oder aus einem Fasermaterial besteht.

6. Kraftfahrzeug, enthaltend eine Instrumententafel nach einem der Ansprüche 2 bis 5. **dadurch gekennzeichnet, dass** das linienförmige Element (2) an seiner Außenseite Stege (2') aufweist.

7. Kraftfahrzeug, enthaltend eine Instrumententafel nach einem der Ansprüche 2 bis 6, **dadurch gekennzeichnet, dass** die Instrumententafel (1) auf ihrer Oberseite mit einer Dekorschicht im wesentlichen vollflächig belegt ist.

8. Kraftfahrzeug, enthaltend eine Instrumententafel nach einem der Ansprüche 2 bis 7, **dadurch gekennzeichnet, dass** die Dekorschicht direkt mit der tragenden Struktur verklebt ist.

## Claims

1. A method for the production of a dashboard (1) and attachment thereof in a motor vehicle, with a frame structure (3) constructed from linear elements (2), which is closed in regions with plastics-material plate elements (5), being covered with a decorative layer, the frame structure being designed such that a cross member extending between the A-pillars of the motor vehicle is dispensed with and the frame structure is connected directly to an end wall and/or the motor vehicle body, **characterised in that** a material-locked connection between the plastics-material plate elements (5) and the linear elements (2) is achieved by injecting in a thermoplastic plastics material which after curing forms the plastics-material plate elements, and melting-round of the thermoplastic plastics material on the linear elements occurs.

2. A motor vehicle, containing a dashboard (1) produced according to Claim 1, the force-absorbing frame structure of the dashboard being connected directly to an end wall and/or a motor vehicle body.

3. A motor vehicle containing a dashboard according to Claim 2, **characterised in that** the cross-section of the linear elements in the state installed in the dashboard is U-shaped, round, oval or polygonal.

4. A motor vehicle containing a dashboard according to Claim 2, **characterised in that** the linear element is a strip of a honeycomb sandwich structure.

5. A motor vehicle containing a dashboard according to one of Claims 2 to 4, **characterised in that** the linear element (2) consists of metal sheet, perforated metal sheet, plastics material or of a fibre material.

6. A motor vehicle containing a dashboard according to one of Claims 2 to 5, **characterised in that** the linear element (2) has bars (2') on its outside.

7. A motor vehicle containing a dashboard according to one of Claims 2 to 6, **characterised in that** the dashboard (1) is covered substantially over its full surface with a decorative layer on its upper side.

8. A motor vehicle containing a dashboard according to one of Claims 2 to 7, **characterised in that** the decorative layer is glued directly to the supporting structure.

## Revendications

1. Procédé de fabrication d'un tableau de bord (1) et de pose de celui-ci dans un véhicule automobile, dans lequel une structure de cadre (3) constituée d'éléments linéaires (2), qui est fermée par segments par des éléments en plaque en matériau synthétique (5), est recouverte d'une couche décorative, dans lequel la structure de cadre est dimensionnée de manière telle que l'on renonce à une traverse s'étendant entre les colonnes A du véhicule automobile et que l'on raccorde la structure de cadre directement à une paroi frontale et/ou à la carrosserie du véhicule automobile, **caractérisé en ce qu'**on assure un assemblage matériel entre les éléments en plaque en matériau synthétique (5) et les éléments linéaires (2) par injection d'un matériau synthétique thermoplastique qui, après durcissement, forme les éléments en plaque en matériau synthétique et **en ce qu'**il se produit une refusion du matériau synthétique thermoplastique sur les éléments linéaires.

2. Véhicule automobile contenant un tableau de bord (1) fabriqué selon la revendication 1, dans lequel la structure de cadre du tableau de bord absorbant les forces est raccordée directement à une paroi frontale et/ou à la carrosserie du véhicule automobile.

3. Véhicule automobile contenant un tableau de bord selon la revendication 2, **caractérisé en ce que** la section transversale des éléments linéaires à l'état incorporé au tableau de bord est en forme de U, ronde, ovale ou polygonale.

4. Véhicule automobile contenant un tableau de bord selon la revendication 2, **caractérisé en ce que** l'élément linéaire est une bande d'une structure en sandwich à nid d'abeille.

5. Véhicule automobile contenant un tableau de bord selon l'une quelconque des revendications 2 à 4, **caractérisé en ce que** l'élément linéaire (2) est constitué d'une tôle métallique, d'une tôle métallique perforée, d'un matériau synthétique ou d'un matériau fibreux.

6. Véhicule automobile contenant un tableau de bord selon l'une quelconque des revendications 2 à 5, **caractérisé en ce que** l'élément linéaire (2) présente sur son côté externe des nervures (2').

7. Véhicule automobile contenant un tableau de bord selon l'une quelconque des revendications 2 à 6, **caractérisé en ce que** le tableau de bord (1) est recouvert sensiblement sur toute la surface de sa face supérieure d'une couche décorative.

8. Véhicule automobile contenant un tableau de bord selon l'une quelconque des revendications 2 à 7, **caractérisé en ce que** la couche décorative est collée directement à la structure portante.
